# EUROPEAN PATENT APPLICATION

(11) **EP 4 205 963 A1**
(43) Date of publication of application: **05.07.2023**
(21) Application number: 21861508.6
(22) Date of filing: 23.08.2021
(51) Int. Cl.: B32B 15/08, B32B 15/20

(54) **COMPOSITE NON-COMBUSTIBLE MOLDED BODY**

(30) Priority: 28.08.2020 JP 2020144648
(71) Applicant: Asahi Kasei Kabushiki Kaisha, Tokyo 1000006 (JP)
(72) Inventor: KASAI Tatsuaki, Tokyo 100-0006 (JP); TANI Shigenari, Tokyo 100-0006 (JP)
(74) Representative: D Young & Co LLP
(86) International application number: PCT/JP2021/030871
(87) International publication number: WO 2022/045083

(57) **Abstract**

An object of the present disclosure is to provide a composite molded article which has light weight and a high fire resistance, and further has a high productivity. The composite non-combustible molded article of the present disclosure includes a laminated structure of a metal layer and a foam layer, wherein the foam layer is made of a bead foam, and the thickness Tm (mm) of the metal layer and the density ρe (g/cm³) of the foam layer satisfy Tm × ρe > 0.02, and the 1% dimensional shrinkage temperature of the foam layer is 100 °C or more.

## Description

### TECHNICAL FIELD

The present disclosure relates to a composite non-combustible molded article.

### BACKGROUND

Conventionally, foams have been used as building materials and the like in view of their excellent lightweightness and heat insulation characteristic. However, there has been a problem in that foams are flammable as compared with unfoamed resins because the air is contained in cells included in foams in many cases.

As an attempt to improve the flame retardancy of a foam, a composite molded article obtained by laminating a non-combustible material such as a metal and a foam is known. It has been known that such a composite can improve the problem of insufficient fire resistance, which is a disadvantage of foams (for example, PTL 1).

### CITATION LIST

### Patent Literature

PTL 1: JP 2012-240302 A

### SUMMARY

### (Technical Problem)

However, with widespread use of secondary batteries, the demand for safety against fire is further intensified, particularly in certain applications, such as applications for automobiles, airplanes, railways, and the like. Therefore, the demand for a composite molded article having improved fire resistance is becoming stronger. In addition, because the weight of a structural body is directly linked to performances such as fuel consumption in these applications, lightweight is also required. Further, a composite molded article to be applied to these applications is generally required to be formed into not only a simple plate shape but also a shape corresponding to a part or the like. In particular, in cases where the thickness of a metal layer is increased for enhancing the fire resistance, the weight of the composite increases or a foam is required to be molded into the shape corresponding to the shape of the metal layer, followed by lamination of these. Hence, the productivity of composites is reduced.

The present disclosure has been conceived of in view of the above circumstances, and it relates to a composite molded article which is lightweight, and has a high fire resistance and an even higher productivity.

### (Solution to Problem)

Thus, the present disclosure provides the following.
[1] A composite non-combustible molded article comprising:
   a laminated structure of a metal layer and a foam layer,
   wherein the foam layer is made of a bead foam,
   a thickness Tm (mm) of the metal layer and the density ρe (g/cm³) of the foam layer satisfy Tm × ρe > 0.02, and
   a 1% dimensional shrinkage temperature of the foam layer is 100 °C or higher.
[2] The composite non-combustible molded article according to [1], wherein a groove is provided at an interface between the metal layer and the foam layer in the laminated structure.
[3] The composite non-combustible molded article according to [2], wherein the groove is a groove in which at least one end thereof extends to an end of the composite non-combustible molded article.
[4] The composite non-combustible molded article according to any one of [1] to [3], wherein a mass ratio of a flame retardant in the foam layer is 1 to 30% by mass with respect to 100% by mass of the foam layer.
[5] The composite non-combustible molded article according to [4], wherein the flame retardant is a flame retardant containing a phosphorus atom.
[6] The composite non-combustible molded article according to any one of [1] to [5], wherein the foam layer comprises a base resin containing 50% by mass or more of a monomer unit having an aromatic.

### (Advantageous Effect)

Because the composite non-combustible molded article of the present disclosure has the above-described configuration, it is lightweight, has a high fire resistance, and is also excellent in productivity.

### BRIEF DESCRIPTION OF THE DRAWINGS

In the accompanying drawings:
FIG. 1 is a schematic view (perspective view) illustrating an example of a composite non-combustible molded article;
FIG. 2 is a schematic view (perspective view) illustrating an example of a foam layer provided with grooves;
FIG. 3 is a diagram for explaining a material flammability test for railway vehicles stipulated by the Japan Railway Rolling Stock & Machinery Association; and
FIG. 4 is a schematic plan view illustrating a shape of grooves formed at the interface between a foam layer and a metal layer of a foam layer in Examples 6 to 11.

### DETAILED DESCRIPTION

The following provides a detailed description of an embodiment of the present disclosure (hereinafter, referred to as the "present embodiment"). However, the present disclosure is not limited to the following embodiment and may be implemented with various alterations that are within the essential scope thereof.

A composite non-combustible molded article of the present embodiment includes a laminated structure of a metal layer and a foam layer, wherein the foam layer is made of a bead foam, and the thickness Tm (mm) of the metal layer and the density ρe (g/cm³) of the foam layer satisfy Tm × ρe > 0.02, and the 1% dimensional shrinkage temperature of the foam layer is 100 °C or higher.

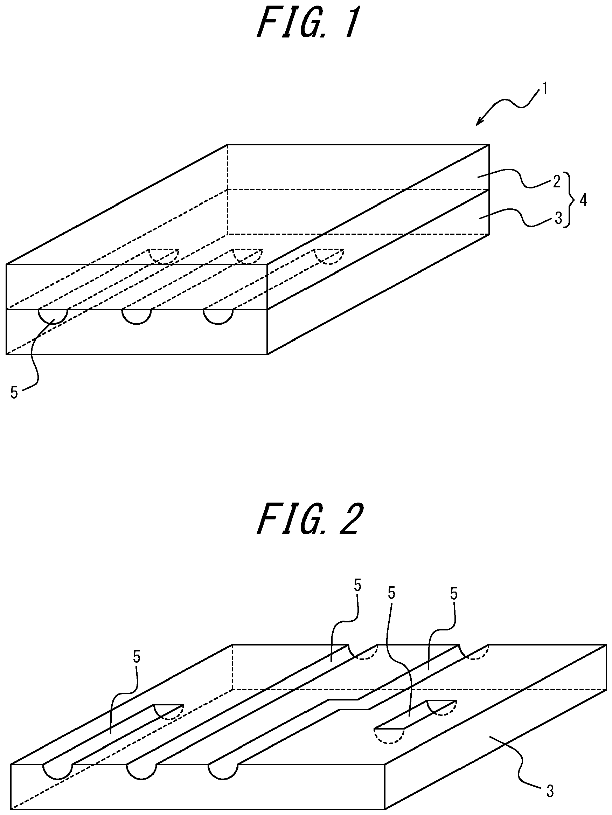

The laminated structure is a laminated structure including two layers, i.e., a metal layer and a foam layer provided on one surface of the metal layer (FIG. 1).

The composite non-combustible molded article may be a two-layer laminate consisting only of the above-mentioned laminated structure (FIG. 1), or may be a three-layer laminate including a layer other than the above-mentioned laminated structure or a laminate of four or more layers including a plurality of the above-mentioned laminated structures.

Examples of the composite non-combustible molded article include a two-layer laminate of a metal layer and a foam layer, and a three-layer laminate of a metal layer / a foam layer / a metal layer. Of these, a two-layer laminate of a metal layer and a foam layer is preferable from the viewpoint of improvement in the lightweightness while achieving inflammability.

Further, the composite non-combustible molded article of the present embodiment can be suitably used as an interior material of an automobile, a railroad, an airplane, or the like, for example. It is preferable that the metal surface side is disposed so as to be in contact with flame in case where a fire or the like occurs. Further, in this case, when the metal layer is damaged, such as when a strong impact is applied, the foam layer would be brought into direct contact with the flame. Therefore, it is preferable that the foam layer has a flame retardancy and is thin.

### (Foam layer)

The foam layer preferably contains a base resin.

Examples of the base resin include thermoplastic resins such as polyphenylene ether-based resins, polystyrene-based resins, polyolefin-based resins such as polyethylene and polypropylene, polyamide-based resins, ABS resins, vinyl chloride resins, acrylic resins, (meth)acrylic ester resins such as polymethyl methacrylate, fluorine resins, polycarbonate resins, ester-based resins such as polyethylene terephthalate, and polyimide resins, and ethylene vinyl acetate copolymers; and thermosetting resins such as phenolic resins, epoxy resins, polyurethanes, melamine resins, and silicone resins. Of these, thermoplastic resins such as polyamide resins, aromatic polyamide resins, polycarbonate-based resins, polyethylene terephthalate resins, and polyimide resins, polystyrene-based resins, polyolefin-based resins, and polyphenylene ether-based resins and thermosetting resins are preferred from the viewpoint of achieving higher inflammability and ease of increasing the heat resistance. Further, from the viewpoint of enhancing the long-term reliability, polystyrene-based resins, polyolefin-based resins, and polyphenylene ether-based resins are more preferable. Polystyrene-based resins, polyolefin-based resins, and polyphenylene ether-based resins do not have an ester bond or an amide bond that is susceptible to hydrolysis, and thus tend to serve to enhance the long-term reliability. In general, it is difficult to apply the bead foaming method to the thermosetting resin, and it is therefore preferable to use a thermoplastic resin from the viewpoint of improving the formability of a molded article, and it is also preferable to use a thermoplastic resin also from the viewpoint of the recyclability of the foam.

The above base resins may be used alone or in a combination of two or more.

The mass ratio of polyphenylene ether-based resins in 100% by mass of the base resin is preferably 20% by mass or more, more preferably 30% by mass or more, and even more preferably 50% by mass or more. The mass ratio of polystyrene-based resins in 100% by mass of the base resin is 15% by mass or more, more preferably 25% by mass or more, and even more preferably 60% by mass or more. The mass ratio of polyolefin-based resins in 100% by mass of the base resin is preferably 50% by mass or more, and more preferably 70% by mass or more.

The base resin preferably contains a resin containing a monomer unit having an aromatic, and more preferably contains only a resin containing a monomer unit having an aromatic. Examples of the resin containing a monomer unit having an aromatic include an aromatic polyamide resin, a polycarbonate-based resin, a polyethylene terephthalate resin, a polyimide resin, a polyphenylene ether-based resin, and a styrene-based resin.

The mass ratio of the monomer unit having an aromatic in the base resin is preferably 20% by mass or more, more preferably 25% by mass to 100% by mass, even more preferably 30% by mass to 100% by mass, and still even more preferably 50% by mass to 100% by mass, with respect to 100% by mass of the base resin, from the viewpoint of reducing of occurrence of fire or flame to the resin because the base resin tends to be carbonized when combusted, and further improving the inflammability by suppressing generation of combustible gases.

When the molecular structure is known, the mass ratio of the monomer unit having an aromatic can be calculated from the molecular structure included in the structural unit. Even when a plurality of resins are included, the mass ratio of the monomer unit having an aromatic in the entire base resin can be calculated by performing the same calculation on each of the resins and the additives and calculating an average according to the weight ratio of the component mixed. In addition, when the stricture is unknown, the monomer unit having an aromatic can be estimated and a calculation can be made by means of NMR or IR or the like.

Examples of the monomer unit having an aromatic include a monomer unit represented by the following formula (1) and a styrene-based monomer.

The polyphenylene ether-based resin may be a polymer having a monomer unit represented by the following general formula (1). The above polyphenylene ether-based resin may be a homopolymer consisting only of a monomer unit represented by the following formula (1), or may be a copolymer including another monomer unit.

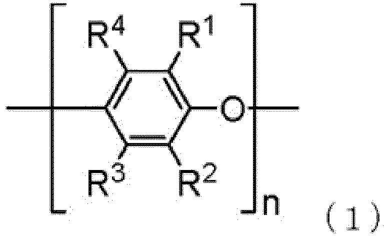

Here, in formula (1), R¹, R², R³, and R⁴ each indicate, independently of one another, a hydrogen, a halogen, an alkyl group having a carbon number of 1 to 20, an alkoxy group having a carbon number of 1 to 20, a phenyl group, or a haloalkyl group or haloalkoxy group having at least two carbon atoms between a halogen and the benzene ring in general formula (1) and not including a tertiary α-carbon. Moreover, n in formula (1) is an integer that represents the degree of polymerization.

Examples of the polyphenylene ether-based resin that may be used include a homopolymer of a monomer unit represented by the above formula (1), such as poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-diphenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro-1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether; and copolymers containing two or more monomer units represented by the above formula (1), such as a copolymer of 2,6-dimethylphenol and 2,3,6-trimethylphenol. Of these, a polyphenylene ether-based resin in which R¹ and R² are alkyl groups having a carbon number of 1 to 4 and R³ and R⁴ are hydrogen or an alkyl group having a carbon number of 1 to 4 is preferred, and a copolymer of poly(2,6-dimethyl-1,4-phenylene ether) and 2,6-dimethylphenol and 2,3,6-trimethylphenol are more preferred, and poly(2,6-dimethyl-1,4-phenylene ether) is more preferred.

One of these may be used individually, or two or more of these may be used in combination.

Note that examples of the above-described polyphenylene ether-based resin include a resin containing 20% by mass or less (preferably 10% by mass or less, more preferably 5% by mass or less, even more preferably 3% by mass or less, particularly preferably 0% by mass) of a monomer unit other than the monomer unit represented by the above formula (1), with respect to 100% by mass of the polyphenylene ether-based resin.

The weight average molecular weight (Mw) of the polyphenylene ether-based resin is preferably 20,000 to 60,000.

Note that the weight average molecular weight (Mw) is the weight average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes).

The mass ratio of the base resin in the foam layer is preferably 50 to 100% by mass, more preferably 60% by mass or more, and even more preferably 70% by mass or more, with respect to 100% by mass of the foam layer, from the viewpoint of enhancing the foamability and enabling an increase in the productivity of the foam layer.

The foam layer preferably further contains a flame retardant. When the foam layer contains a flame retardant, the flame retardancy is increased, so that occurrence of fire or flame to the foam layer is more likely to be prevented when combusted, and generation of combustible gases is more likely to be suppressed, and the inflammability is further improved.

Examples of the flame retardant include organic flame retardants and inorganic flame retardants.

Examples of organic flame retardants include halogenated compounds, representative examples of which are bromine compounds, and non-halogenated compounds, representative examples of which are phosphorus-based compounds and silicone-based compounds.

Examples of inorganic flame retardants include metal hydroxides, representative examples of which are aluminum hydroxide and magnesium hydroxide, and antimony-based compounds, representative examples of which are antimony trioxide and antimony pentoxide.

One of these flame retardants may be used individually, or two or more of these flame retardants may be used in combination.

Of the above flame retardants, phosphorus-based flame retardants containing a phosphorus atom are more preferable from the viewpoint of promoting carbonization of the monomer unit having an aromatic and further improvement in the inflammability.

Phosphorus or a phosphorus compound can be used as a phosphorus-based flame retardant. The phosphorus may be red phosphorus. The phosphorus compound may be a phosphate ester, a phosphazene compound having a bond between a phosphorus atom and a nitrogen atom in a main chain thereof, or the like.

Examples of phosphate esters that may be used include trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bis(diphenyl phosphate). Moreover, phosphate ester compounds of a type obtained through modification of any of the preceding examples with any of various substituents and various condensation-type phosphate ester compounds may be used.

The silicone-based flame retardant may be a (mono or poly)organosiloxane.

Examples of (mono or poly)organosiloxanes include monoorganosiloxanes such as dimethylsiloxane and phenylmethylsiloxane; polydimethylsiloxane and polyphenylmethylsiloxane that are obtained through polymerization of these monoorganosiloxanes; and organopolysiloxanes such as copolymers of these monoorganosiloxanes.

In the case of an organopolysiloxane, a bonding group of a main chain or branched side chain thereof may be a hydrogen, an alkyl group, or a phenyl group, and is preferably a phenyl group, a methyl group, an ethyl group, or a propyl group, but is not limited thereto. Moreover, a terminal bonding group may be a hydroxy group, an alkoxy group, an alkyl group, or a phenyl group.

The form of the silicone may be any form such as an oil form, gum form, varnish form, powder form, or pellet form without any specific limitations.

The mass ratio of the flame retardant in the foam layer is preferably 1 to 30% by mass, more preferably 3 to 30% by mass, and even more preferably 5 to 25% by mass, with respect to 100% by mass of the foam layer, from the viewpoint of further improvement in the inflammability. Because the heat resistance generally tends to decrease when the addition amount of the flame retardant is increased. Thus, it is preferable to adjust the type and amount of flame retardant to be added in the foam layer in the composite non-combustible molded article so that the foam layer has appropriate flame retardancy and heat resistance, and it is more preferable to use the above-mentioned preferred flame retardant in a preferred mass ratio mentioned above.

The foam layer may further contain an additive in addition to the base resin and the flame retardant.

Examples of the additives include a flame retardant aid, a heat stabilizer, an antioxidant, an antistatic agent, an inorganic filler, an anti-dripping agent, an ultraviolet absorber, a light absorber, a plasticizer, a mold release agent, a dye or pigment, and a rubber component, and these additives may be added to the extent that the effects of the present disclosure are not impaired.

The mass ratio of the additive in the foam layer is preferably 30% by mass or less, more preferably more than 0% by mass and 25% by mass or less with respect to 100% by mass of the foam layer.

The thickness of the foam layer can be appropriately selected according to the application, but is preferably 2 to 60 mm, more preferably 3 to 50 mm, and even more preferably 3 to 30 mm from the viewpoint of enabling the inflammability to be easily maintained while enhancing the lightweightness.

As to the density ρe of the foam layer, as the density is reduced, the amount of resin contained in the unit volume increases and thus the fire resistance increases but the lightweightness decreases. For this reason, from the viewpoint of making the fire resistance and the lightweightness to fall within suitable ranges and increasing the handleability, it is preferably 0.01 to 0.5 g/cm³, more preferably 0.02 to 0.4 g/cm³, and even more preferably 0.03 to 0.3 g/cm³.

Further, because the expansion ratio of the foam layer is a value defined by the inverse of the density, the expansion ratio is preferably within a range calculated from the density of the foam described above.

Note that the density and the expansion ratio refer to values measured by the methods that will be described in EXAMPLES to be described later.

The foam layer is made of a bead foam. A bead foam refers to a foam made of expanded particles. By using the bead foam, the foam layer is made to be easily formed into a shape that matches the shape of the surface of the metal layer, and a structure excellent in adhesion between the foam layer and the metal layer can be easily obtained.

The bead foam preferably contains a thermoplastic resin or a thermosetting resin as a base resin. The bead foam may be a foam that is obtained through foaming of base resin pellets that contain the base resin and optionally further contain additives such as a flame retardant.

The bead foam is preferably a resin foam, and examples thereof include a foam of a polyolefin such as polyethylene or polypropylene, polyurethane, polyester, an acrylic resin, polystyrene, polyamide, polyphenylene ether, polymethacrylamide, melamine, or a phenolic resin. Of these, polypropylene, polystyrene, polyurethane, an acrylic resin, polyamide, and polyphenylene ether are preferable from the viewpoint of high heat insulation and heat resistance.

The bead foam may include additives. Examples of additives include a flame retardant, a flame retardant aid, a heat stabilizer, an antioxidant, an antistatic agent, an inorganic filler, an anti-dripping agent, an ultraviolet absorber, a light absorber, a plasticizer, a mold release agent, a dye or pigment, a rubber component, and resins other than the base resin, and these additives may be added to the extent that the effects of the present disclosure are not impaired.

The content of additives is preferably 0 to 40 parts by mass, and more preferably 5 to 30 parts by mass with respect to 100 parts by mass of the base resin.

In addition, because the bead foam typically contains the air, it has a high flammability and may have reduced safety. Therefore, it is preferable that the foam has flame retardancy. Examples of the method for enhancing the flame retardancy of the foam include a method of selecting a resin having a high flame retardancy such as a phenol resin, a melamine resin, and a polyphenylene ether resin, as the base resin, a method of selecting a resin containing an aromatic ring as described above, a method of adding a flame retardant to the base resin, and the like. When a flame retardant is used, it is possible to use the ones mentioned above. The content of the flame retardant may be set within the range for content of an additive, and is preferably more than 0 parts by mass and 30 parts by mass or less, and more preferably 5 parts by mass to 25 parts by mass when the base resin is taken to be 100 parts by mass. Although adding more of a flame retardant makes it easier to obtain an effect of improving flame retardancy of the foam, the addition of a flame retardant generally tends to decrease the production stability upon foam molding.

Examples of rubber components that may be used include butadiene, isoprene, 1,3-pentadiene, and the like, but are not limited thereto. Such a rubber component is preferably a component that is dispersed in a particulate form in a continuous phase formed of a polystyrene-based resin. The method by which any of these rubber components is added may be by adding the rubber component itself or by using a resin such as a styrene-based elastomer and a styrene-butadiene copolymer as a rubber component supply source. In a case in which a rubber component is added, the content of the rubber component may be set within the range for the content of an additive, and is preferably 0.3 parts by mass to 15 parts by mass, more preferably 0.5 parts by mass to 8 parts by mass, and even more preferably 1 part by mass to 5 parts by mass, when the base resin is taken to be 100 parts by mass. When the content is 0.3 parts by mass or more, it is easy to obtain a foam having excellent resin flexibility and extension, a low tendency for foam cell membranes to rupture during foaming, and excellent shaping processability and mechanical strength. Note that the above-described rubber component refers to a component other than the base resin mentioned above.

The production method of the bead foam may be bead foaming (in-mold foaming). Bead foaming or in-mold foaming is a method in which expandable particles are loaded into a mold and are then heated by steam or the like so as to cause expansion of the expandable particles and, simultaneously thereto, thermal fusion of the expanded particles to one another to thereby obtain a foam.

In the case of the extrusion foaming method, the obtained foam typically has a plate form, sheet form, or the like, and thus a punching step of cutting the foam to a desired shape and a thermal bonding step of bonding the cut-out parts are required in the case where it is processed. In contrast, in the case of bead foaming, it is easy to shape a foam into a complicated shape because a mold of a desired shape is produced and then expandable particles are loaded into the mold and shaped. Although shaping of a foam with a complicated shape is also possible in the case of the injection foaming method, it is easier to increase the expansion ratio of the foam and to achieve flexibility in addition to excellent thermal insulation in the case of bead foaming.

A blowing agent is not specifically limited, and generally used gases can be used. Examples of blowing agents that may be used include inorganic gases such as air, carbon dioxide gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylic acid esters such as formic acid methyl ester, formic acid ethyl ester, formic acid propyl ester, formic acid butyl ester, formic acid amyl ester, propionic acid methyl ester, and propionic acid ethyl ester; and chlorinated hydrocarbons such as methyl chloride and ethyl chloride. One of these may be used individually, or two or more of these may be used in combination.

The blowing agent preferably has little or no combustibility and combustion support ability from a viewpoint of flame retardance, and is more preferably an inorganic gas or the air and is even more preferably an inorganic gas from a viewpoint of the safety of the gas. An inorganic gas has a low tendency to dissolve in a resin compared to an organic gas such as a hydrocarbon and can easily escape from a resin, which is beneficial in providing better dimensional stability over time of the foam after shaping. Moreover, in a case in which an inorganic gas is used, plasticization of a resin due to residual gas tends not to occur. Thus, this has a benefit that an excellent heat resistance can be exhibited at an earlier stage without a step of aging or the like. Of inorganic gases, carbon dioxide gas is preferable from viewpoint of solubility in a resin and ease of handling. Hydrocarbon-based organic gases generally have high combustibility and tend to cause poorer flame retardance when they remain in a foam.

The expanded particles used in bead foaming can be obtained by causing the inclusion (impregnation) of a blowing agent in base resin pellets containing the base resin, the flame retardant, and the like and then causing foaming to occur. More specifically, the expanded particles may be produced by loading base resin pellets (pellet-like or beads-like ones, etc.) into a pressure-resistant vessel, replacing gas inside the vessel with dry air, injecting a blowing agent (gas) so that the base resin pellets are impregnated with the blowing agent (gas), and subsequently releasing the pressure and transferring the base resin pellets from the pressure-resistant vessel to a foaming furnace where they are heated and caused to foam through pressurized steam while rotating an impeller. Although no specific limitations are placed on the conditions under which the base resin pellets are impregnated with the foaming agent (gas), an impregnation pressure of 0.3 MPa to 30 MPa, an impregnation temperature of -20 °C to 100 °C, and an impregnation time of 10 minutes to 96 hours, for example, are preferable from a viewpoint of causing impregnation of the base resin pellets with the blowing agent (gas) to proceed more efficiently. Moreover, the maximum vapor pressure of pressurized steam inside the foaming furnace is preferably 30 kPa·G to 700 kPa·G from a viewpoint of more easily obtaining the desired expansion ratio and achieving a better external appearance.

The method by which a foam is shaped using the expanded particles is not specifically limited and may, for example, be a method in which the expandable particles are loaded into a cavity of a shaping mold, are heated so as to cause expansion and, simultaneously thereto, thermal fusion of the expanded particles to one another, and then cooling is performed to solidify the product and perform shaping. A commonly known method can be adopted as the loading method of the expandable particles without any specific limitations. The expandable particles are preferably subjected to pressurization treatment with a gas prior to being loaded into the cavity of the shaping mold. By providing a fixed gas pressure inside cells of the expanded particles, it is possible to cause strong fusion of constituent expanded particles of the resultant foam and to enhance the rigidity and external appearance of a molded article. The gas used in the pressurization treatment is not specifically limited but is preferably air and an inorganic gas from a viewpoint of ease of handling and economy. The method of pressurization treatment is not specifically limited and may be a method in which the expandable particles are loaded into a pressurization vessel, pressurized gas is introduced, and the gas is supplied to inside of the pressurization vessel by increasing the pressure to a maximum pressure of 0.1 MPa to 20 MPa over 10 minutes to 96 hours. The method of heating during shaping of the expanded particles may be heating using a heating medium such as steam, heating by a heater such as an IR heater, heating using microwaves, or the like. In the case of heating using a heating medium, a general purpose heating medium may be used, with steam being preferable from a viewpoint of efficiently heating the resin.

In the composite non-combustible molded article of the present embodiment, it is preferable that the heat resistance of the foam layer is high from the viewpoint of increasing the inflammability by reducing deformation when combusted, and from the viewpoint of suppressing deformation on the foam layer side when combusted and making it easier to maintain the mechanical properties and the appearance of the molded article. The heat resistance of the foam layer is preferably such that the 1% dimensional shrinkage temperature of the foam layer described in Examples to be described below is 100 °C or higher.

The cell structure of the foam may be either a communicating cell structure or a closed cell structure. However, the closed cell structure is preferred because the mechanical strength and heat insulation characteristic of the foam layer tend to be enhanced when the closed cell structure is used.

The 1% dimensional shrinkage temperature can be adjusted by adjusting the type and the mass ratio of the base resin and the type and the mass ratio of the flame retardant. For example, an adjustment can be made by using the above-mentioned suitable resin as the base resin at the above-mentioned preferred mass ratio, or by adding the above-mentioned suitable flame retardant as a flame retardant at the above-mentioned preferred mass ratio.

### (Metal layer)

The metal layer is preferably a layer containing a metal, and is preferably a layer made only of a metal.

Examples of the metal include aluminum, stainless steel, iron, steel, titanium, and alloys of these metals. One of these may be used individually, or two or more of these may be used in combination.

Of these, aluminum or stainless steel is preferable from the viewpoint of excellent balance between lightweightness and strength, processability into a predetermined shape, and low occurrence of corrosion or the like.

The thickness Tm of the metal layers is preferably 0.1 to 5.0 mm, more preferably 0.15 to 3.0 mm, and even more preferably 0.3 to 3.0 mm, from the viewpoint of easiness of increasing the inflammability and low probability of impairing the lightweightness.

### (Groove)

In general, when an object is combusted, gases are generated by the combustion or heating and the gases cause further spreading of a fire. Therefore, it is preferable that the laminated structure includes a groove at the interface between the metal layer and the foam layer, from the viewpoint of effectively promoting dissipation of the gases generated when combusted and ease of enhancing he inflammability.

Here, the groove is not particularly limited in shape, and refers to a portion where the metal layer and the foam layer do not adhere to each other and there is a gap through which gases can be discharged or diffused. The groove may be a gas diffusion path for diffusion of gases (for example, a groove that does not extend to an end of the composite non-combustible molded article), or may be a gas discharge flow path for discharge of gases (for example, a groove in which at least one end extends to an end of the composite non-combustible molded article).

The expanded particles after foaming may not form a perfect plane, and the surface of the foam layer after bead foaming may have small gaps between adjacent expanded particles. The metal layer and the foam layer may not adhere to each other in the gap. The non-adhered portion between the gap between the expanded particles on the surface of the foam layer and the metal layer includes a gap in a case where the gap is not merged with an adjacent gap or the like without forming a huge gap structure, and a huge gap structure in a case where gaps between expanded particles of the bead foam are used as a groove.

On the adhesion surface of the foam layer made of the bead foam and the metal layer, when any area of 5 cm² (preferably, an area of a rectangular shape) is observed, it is regarded that a huge gap structure is formed if a non-adhered portion connecting from one gap is formed across the entire observed surface (the non-adhered portion connecting from one end to the opposite end of the observed portion is formed), and such a structure is referred to as a huge gap structure. The huge gap structure is not linear. In a huge gap structure, the area ratio of the non-adhered portion to the observed area is preferably 1% or more, more preferably 5% or more, even more preferably 10% or more. The huge gap structure is preferably a structure in which at least one end thereof extends to an end of the composite non-combustible molded article, and is more preferably a structure in which both ends thereof extend to an end(s) of the composite non-combustible molded article.

Further, the groove may be a groove which is intentionally formed on the foam layer side (for example, a groove including at least a part of a straight portion, a groove in which the ratio of the straight portion is more than 50% (preferably 70% or more, more preferably 90% or more, and even more preferably 100%) of the total length of the flow path which is taken to be 100%, or the like), or may be a huge gap structure as described above.

It is preferable that a number of grooves are present from the viewpoint of effectively promoting dissipation of gases generated in the foam layer or the other layer and from the viewpoint of reducing the concentration of the generated gases to thereby inhibit combustion in a case where a fire occurs and the molded article is heated. Further, it is more preferable that a groove has at least one end extending to an end of the composite non-combustible molded article (e.g., an end of the interface of the laminated structure) (FIG. 2) from the viewpoint of promoting escape of the gases to the outside of the laminated structure and further improving the flame retardancy. In other words, it is preferable that a groove has one end and another end extending to ends of the composite non-combustible molded article (the second groove 5 from the left in FIG. 2 and the third groove 5 from the left in FIG. 2), or a groove has one end extending to an end of the composite non-combustible molded article and another end terminated in the interface of the laminated structure (the leftmost groove 5 in FIG. 2).

It is preferable to have a groove (rightmost in FIG. 2, gas diffusion path) neither of which ends extends to an end of the molded article because the gases can be temporarily stored at the interface between the foam layer and the metal layer to thereby delay combustion.

Such a groove may have a straight shape or may have a bent portion (FIG. 2). In particular, from the viewpoint of promoting escape of a combustible gas generated in the foam layer to the outside of the laminated structure, it is preferable that the groove is in a straight shape. Here, the straight shape refers to a structure of a portion in which the inner wall of the groove extends substantially linearly in an arbitrary direction.

It is preferable that the groove is formed on the surface of the bead foam at the interface and the surface of the metal layer is flat, so that the groove is easily formed and the smoothness of the surface of the molded article is increased.

It is preferable that the groove has the same cross-sectional shape perpendicular to the extending direction of the groove from one end to the other end thereof.

The area of the cross section is preferably 0.1 to 30 mm², more preferably 0.5 to 20 mm², and even more preferably 1 to 15 mm² from the viewpoint of balancing the ease of escape of gases to the outside, the strength, and the adhesion.

The number of the grooves may be one or more than one. Of these, it is preferable that there are a plurality of grooves from the viewpoint of promoting escape of a combustible gas generated in the foam layer to the outside of the laminated structure and further improving the flame retardancy.

The shape and/or size of the plurality of grooves may be the same or different.

Examples of the method of forming the groove include a method of forming the groove in the foam layer or the metal layer in advance, and then laminating the two layers. From the viewpoint of ease of processing and ease of freely designing the shape of the groove, it is preferable to form the groove in advance in the foam layer.

Further, examples of the method of forming a groove in the foam layer include a method of producing a groove by secondary processing such as cutting, and a method of forming a groove in a mold in advance so that the groove is transferred to a foam. In particular, a groove can be easily formed in the bead foam by providing the mold with the shape of the groove without requiring secondary processing, whereby increases the productivity. In the case of a bead foam, a groove can also be formed by forming a gap between expanded particles or by forming a huge gap structure. As to the gap between expanded particles and the huge gap structure described above, a gap between expanded particles can be formed by suppressing expansion of the expandable particles during molding by using a method of lowering the pressure of addition gas in the additional step during molding, a method of setting the maximum temperature during molding to a relatively low temperature (for example, to a temperature equal to or lower than the glass transition temperature of the composition containing the base resin forming the foam (the mixture of the base resin and the additive) plus 20 °C, a method of shortening the heating time upon molding, or the like. Other examples of the method include a method of setting the heating temperature during molding to a very high temperature, or extending the heating time, or a method of, after molding, heating at a temperature equal or higher than the glass transition temperature of the composition containing the base resin forming the foam (or a temperature equal to or higher than the Vicat softening temperature which is measured using a plate material of the composition containing the base resin forming the foam in the case where the glass transition temperature is not clear), whereby the expanded particles can be thermally shrunk to form a gap. Further, a non-combustible composite molded article can be produced without requiring an adhesive step or the like by performing the bead foam molding in a state in which a metal is disposed in the mold in advance. However, in general, heat is hardly transferred during heating by steam or the like during molding in the portion where the metal layer and the bead foam is in contact with each other. Thus, the heating tends to be insufficient as compared with the other portions, which can be utilized to form a gap between the expanded particles to form a groove.

Another method for forming the grooves is to dispose a layer through which gases can pass, between the metal layer and the foam layer. The layer through which gases can pass is exemplified by a foam having a communicating cell structure and a layer in which a spacer or the like is disposed. Alternatively, it is also possible to use the foam layer per se as a groove in the bead foam forming the foam layer, by shaping expandable particles into an irregular shape (e.g. doughnut-like shape) rather than a spherical shape.

Hereinafter, the characteristics of the laminated structure will be described.

In the laminated structure, one surface of the metal layer and one surface of the foam layer are preferably in close contact with each other except for the groove.

In the laminated structure, the ratio of the area in which the metal layer and the foam layer are in close contact with each other is preferably 50 to 100%, more preferably 70% or more and less than 100%, and even more preferably 80 to 99%, when the area of the one surface of the metal layer is taken to be 100%.

In the above laminated structure, the thickness Tm (mm) of the metal layer and the density ρe (g/cm³) of the foam layer satisfy Tm × ρe > 0.02, preferably satisfy 1.0 ≥ Tm × ρe > 0.02, more preferably satisfy 0.3 ≥ Tm × ρe > 0.025, and even more preferably satisfy 0.15 ≥ Tm × ρe > 0.025. In general, provision of the metal layer can suppress heat transfer from flame to the composite non-combustible molded article by means of radiation upon exposure to flame. In addition, as the thickness Tm of the metal layer increases, diffusion of the heat due to the heat conduction of the metal layer, the reduction in the rate of temperature rise due to the increase in the specific heat, the extension of the time until the deformation amount and deformation of the metal layer starts, and the like can be achieved. Therefore, the inflammability of the composite non-combustible molded article is more likely to be enhanced. However, as the thickness of the metal layer Tm increases, the lightweightness is impaired. On the other hand, as the density ρe of the foam layer increases, the amount of resin per unit volume increases, so that the foam layer is less likely to be combusted when exposed to flame, and the heat capacity increases so that it becomes easier to suppress the temperature increase rate and deformation. In addition, because the heat resistance of the foam layer is likely to increase, it becomes easier to increase the inflammability of the composite non-combustible molded article. However, as the density of the foam layer increases, the lightweightness is impaired. When the value of Tm × ρe is within the above range, it is possible to obtain a non-combustible composite molded article which can maintain a very excellent inflammability while maintaining lightweightness at the same time.

In this embodiment, in the case where a plurality of metal layers are provided, the calculation is made based on the thickness of the metal layer that is close to the surface in contact with flame or the metal layer that is the closest to the outer surface if the side in contact with the flame is unclear. Further, if the side in contact with the flame is unclear and there are two or more metal layers at the locations at the same distance from the outer surface (for example, in the case where metal layers are disposed on the uppermost and lowermost surfaces as in a sandwich structure), only the metal layer having a smaller weight per unit surface area (g/cm²) is taken into consideration or either of the layers may be taken into consideration if their weights per unit surface area are the same.

In addition, the composite non-combustible molded article can enhance the lightweightness and has a better lightweightness compared with a typical metal plate or the like. Therefore, the weight per unit surface area (g/cm²) of the non-combustible composite is preferably 3.0 g/cm² or less, more preferably 1.0 g/cm² or less, and even more preferably 0.5 g/cm² or less. Further, because it is possible to increase the thickness of the composite non-combustible molded article as a whole even when the weight per unit surface area is equivalent to or less than a generally-used metal plate, it becomes easier to increase particularly the bending rigidity and usage as a structural material becomes easier.

The thickness of the laminated structure is preferably 2 mm to 60 mm, and more preferably 3 mm to 50 mm.

### (Other layers)

Examples of layers other than the laminated structure included in the composite non-combustible molded article of the present embodiment include a metal layer (a metal layer different from the metal layer included in the laminated structure), a sticking adhesive layer, a resin layer, and a fiber-reinforced resin layer.

The metal layer as the other layer may be a layer similar to the metal layer described above, and may be the same metal layer as the metal layer included in the laminated structure or may be a different metal layer.

### (Method for producing composite non-combustible molded article)

In the composite non-combustible molded article of the present embodiment, a method of adhesively laminating the metal layer and the foam layer is not particularly limited, but examples thereof include a method of adhering the foam layer and the metal layer with an adhesive, a sticking adhesive, an adhesive sheet, or the like, a method of melting the surface of the foam layer and fusing the foam layer to the metal layer, a method of heating and pressing, a method of inserting the metal layer into the foam layer to be held therein, a method of imparting a shape to the metal layer in advance so as to hold the foam, and a method of laminating by an anchor effect by increasing the contact area with the foam layer by increasing the surface roughness of the metal layer.

The following provides a description of properties of the composite non-combustible molded article of the present embodiment.

The weight per unit surface area of the composite non-combustible molded article of the present embodiment is preferably 0.05 to 1.00 g/cm², and more preferably 0.05 to 0.50 g/cm², in view of the balance between the lightweightness and the inflammability.

Note that the weight per unit surface area can be calculated by dividing the weight of the composite non-combustible molded article by the surface area on the metal layer side.

The composite non-combustible molded article of the present embodiment is preferably ultra flame retardant or non-combustible in a material flammability test for railway vehicles to be described later, and is preferably non-combustible from the viewpoint of enhancing the inflammability.

The composite non-combustible molded article of the present embodiment has light weight and fire resistance. Therefore, the composite non-combustible molded article can be suitably used for a structure for railways, automobiles, motorcycles, and aircrafts, which are required to have good fuel efficiency and to have fire resistance in a high-speed movement in which combustion tends to spread when catching fire. In particular, it can be suitably used for structures for railways, automobiles, motorcycles, and aircrafts because those applications require not only simple inflammability but also lightweightness and ease of assembling and repairing at the same time, unlike building material applications requiring fire resistance in a stationary state. Further, because the composite non-combustible molded article of the present embodiment can achieve a weight reduction of structure to be applied to a wall and a ceiling, it can reduce the center of gravity as much as possible. Accordingly, it can be suitably used as a structure for railway, automobiles, motorcycles, aircraft because the stability during running can be achieved.

Of the applications for railways, automobiles, motorcycles, and aircrafts described above, the present disclosure is suitable for use in a ceiling and lining, a floor plate, and an underfloor surface of a passenger cabin for which inflammability is required. Note that the application for the ceiling or the like of a passenger cabin include a part of a component mounted on the ceiling (e.g., a fluorescent lamp, an air conditioner, a ventilation duct, etc.) in addition to the material constituting the ceiling or the like per se.

### EXAMPLES

The present disclosure will now be described in more detail based on Examples, which however shall not be construed as limiting the scope of the present disclosure.

Evaluation methods used in the examples and comparative examples are described below.

### (1) Expansion ratio of foam layer

A sample of roughly 30 mm-square and 10 mm in thickness was cut out from a foam layer of a composite non-combustible molded article obtained in each of the subsequently described examples and comparative examples. The mass W (g) of this sample was measured, and a value (V/W) obtained by dividing the sample volume (cm³) by the mass was taken to be the expansion ratio (cm³/g).

Note that in a case in which the cutting described above is difficult, the same material as in each example or comparative example may be prepared, the sample mass may be measured, the volume may be measured by submersion, and then these values may be used to calculate the density.

### (2) Flame retardance of foam layer

A foam layer obtained in each of the subsequently described examples and comparative examples was subjected to a test in accordance with the UL-94 vertical method (20 mm vertical flame test) of UL standards (United States of America) so as to evaluate flame retardance.

The measurement method is described in detail below.

Five test specimens of 125 mm in length, 13 mm in width, and 5 mm in thickness that had been cut out from the foam layer were used. Each test specimen was vertically attached to a clamp, a 20 mm flame was twice applied to the test specimen for 10 seconds, and a judgment of V-0, V-1, or V-2 was made based on the burning behavior.

V-0: Flame burning time of both first and second applications was 10 seconds or less, total flame burning time and flameless burning time for second application was 30 seconds or less, total flame burning time for 5 test specimens was 50 seconds or less, no samples burn up to position of fixing clamp, and no catching fire of cotton due to burning drippings

V-1: Flame burning time of both first and second applications was 30 seconds or less, total flame burning time and flameless burning time for second application was 60 seconds or less, total flame burning time for 5 test specimens was 250 seconds or less, no samples burn up to position of fixing clamp, and no catching fire of cotton due to burning drippings

V-2: Flame burning time of both first and second applications was 30 seconds or less, total flame burning time and flameless burning time for second application was 60 seconds or less, total flame burning time for 5 test specimens was 250 seconds or less, and no samples burn up to position of fixing clamp, but catching fire of cotton occurred due to burning drippings

Note that a judgment of "non-conforming (×)" was made in cases that did not correspond to any of V-0, V-1, and V-2.

### (3) Material flammability test for railway vehicles

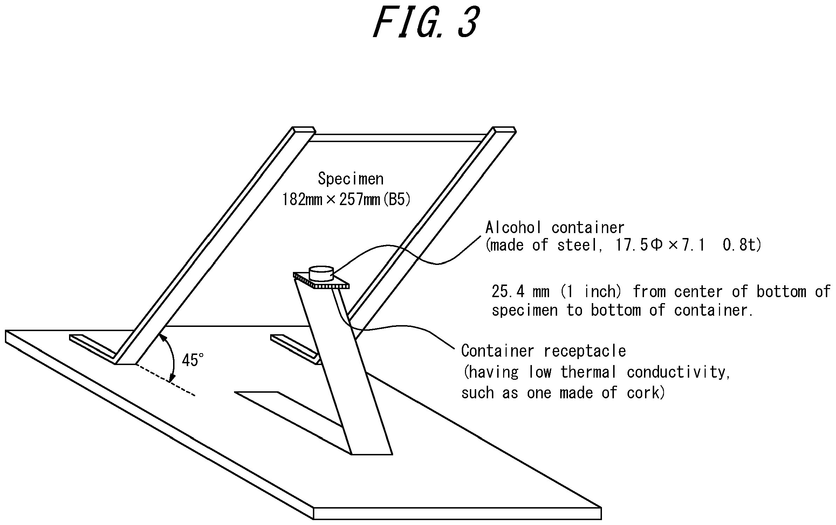

As illustrated in FIG. 3, each molded article described in Examples and Comparative Examples were produced into a B4 size (182 mm × 257 mm). Subsequently, the test sample (specimen) was set with an inclination of 45 °, and an alcohol container was placed on a container receptacle made of a material having a low thermal conductivity such that the center of the bottom of the alcohol container was located 25.4 mm (1 inch) vertically below the center of the bottom surface of the test sample. Then, 0.5 cc of a pure ethyl alcohol was poured and fire was set until the fuel burned out.

A determination on combustion was made as described in Table 1 below, according to a material flammability test for railway vehicles stipulated by the Japan Railway Rolling Stock & Machinery Association.

The conditions in the test room were as follows: a temperature of 18 °C and a humidity of 65% with no air flow.

In this test, the burning time of the alcohol was 90 to 100 seconds.

Then, the metal layer was carefully peeled off from the molded article after the test, and the surface of the foam on the metal layer side which had been directly under the flamed portion of the metal layer during the combustion test was observed. A visual observation was made except for the rough surface portion occurred upon peeling, and an evaluation was made as follows: X (bad) when deformation with a maximum depth of 0.5 mm or more was observed on the surface of the foam, or O (good) when there was no such deformation.

### (4) 1% dimensional shrinkage temperature of foam

A test on a thermal dimensional change was conducted on each foam layer obtained in Examples and Comparative Examples to be described later in accordance with the dimensional stability test method B at high temperatures of JIS K6767. At this time, a test was conducted by changing the heating temperature by 10 °C, such as by changing the heating temperature to 70 °C, 80 °C, and 90 °C, and the temperature when the heating dimensional change rate exceeded 1% was determined to be the 1% dimensional shrinkage temperature.

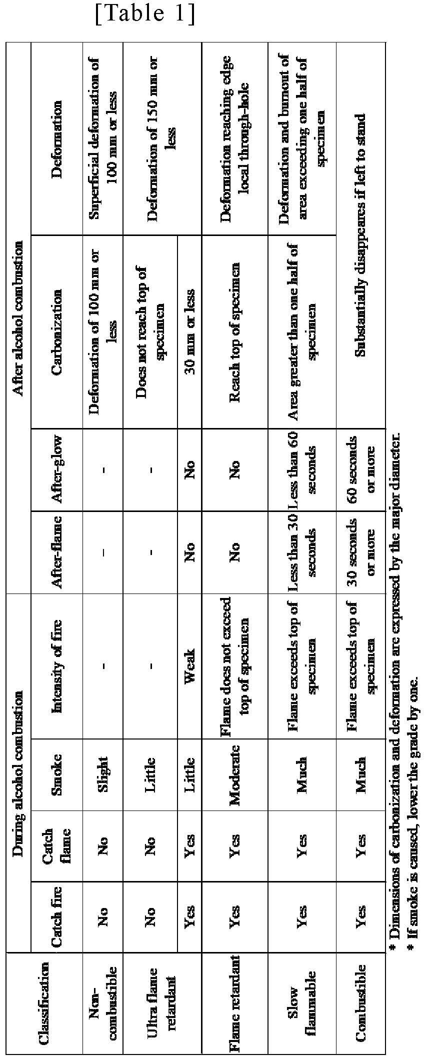

### (Example 1)

After adding together 60% by mass of S201A (produced by Asahi Kasei Corporation) as a polyphenylene ether-based resin (PPE), 15% by mass of bisphenol A bis(diphenyl phosphate) (BBP) as a non-halogenated flame retardant, 10% by mass of high impact polystyrene resin (HIPS) having a rubber concentration of 6% by mass, and 15% by mass of GP685 (produced by PS Japan Corporation) as a general purpose polystyrene resin (PS), these materials were subjected to hot melt-kneading in an extruder and were subsequently extruded so as to produce base resin pellets. Note that the base resin was a polyphenylene ether-based resin and a general-purpose polystyrene resin. Because they both had an aromatic ring in the structural units, the amount of the monomer unit having an aromatic in the base resin was 100% by mass.

In accordance with a method described in Example 1 of JP H4-372630 A, the base resin pellets were loaded into a pressure-resistant vessel, gas inside the vessel was purged with dry air, carbon dioxide (gas) was subsequently injected as a blowing agent, the base resin pellets were impregnated with carbon dioxide for 3 hours under conditions of a pressure of 3.0 MPa and a temperature of 10 °C, and then the base resin pellets were removed from the pressure-resistant vessel and were immediately transferred to a foaming furnace where base resin pellets were subjected to foaming through steam pressurized to a maximum of 260 kPa·G while rotating an impeller at 77 rpm so as to obtain expandable particles (expandable beads). The hydrocarbon gas content in the expandable particles straight after foaming was measured by gas chromatography but was below the limit of detection (0.01% by mass).

Thereafter, the expandable particles were loaded into a vessel and were subjected to pressurization treatment by introducing pressurized air into the vessel (pressure increased to 0.4 MPa over 4 hours and then held at 0.4 MPa for 16 hours). The resultant was loaded into a mold for in-mold shaping including steam holes and was heated by steam so as to cause expansion and fusion of the expandable particles to one another. Thereafter, cooling was performed, and the resultant product was removed from the shaping mold to obtain a foam formed of expanded particles (B5 size, 182 × 275 mm, the thickness is described in Table 2).

The obtained foam and an aluminum plate (A5052) having the thickness described in Table 2 were bonded together with an adhesive (SX720W, manufactured by CEMEDINE Co., Ltd., applied to the foam with a thickness of 0.05 mm) to obtain a molded article. It was confirmed that the shape of the foam favorably followed the shape of the mold and the moldability was good.

The results of evaluations of the obtained molded article and the foam layer were listed in Table 2.

### (Example 2)

A molded article was produced and the above-described evaluations thereof were performed in the manner similar to Example 1 with the exception that the maximum vapor pressure of pressurized steam during production of expandable particles from base resin pellets was changed to 280 kPa·G and the thickness of the aluminum plate was changed. The results are listed in Table 2.

### (Examples 3 to 5 and Comparative Example 2)

A molded article was produced and the above-described evaluations thereof were performed in the manner similar to Example 1 with the exception that the maximum vapor pressure of the pressurized water vapor during production of expandable particles from the base resin pellets was changed to 330 kPa·G, the thickness of the aluminum plate was changed, and the thickness of the foam layer was changed. The results are listed in Table 2.

### (Examples 6 to 11)

A molded article was produced and the above-described evaluations thereof were performed in the manner similar to Example 3 with the exception that the maximum vapor pressure of the pressurized water vapor during production of expandable particles from the base resin pellets was changed to 330 kPa·G, the thickness of the aluminum plate was changed, the thickness of the foam layer was changed, and further grooves were formed in the foam layer in advance such that the portion other than the grooves was in close contact with the metal layer upon lamination. The results are listed in Table 2. Note that a molded article was obtained by applying the adhesive to the areas other than the grooves in the foam. Further, the adhesion area ratio was calculated by peeling the metal layer from the obtained molded article, visually confirming the adhesion state, and measuring the area of the portions where the metal layer and the foam layer had been in contact with each other.

### Formation of grooves in foam layer:

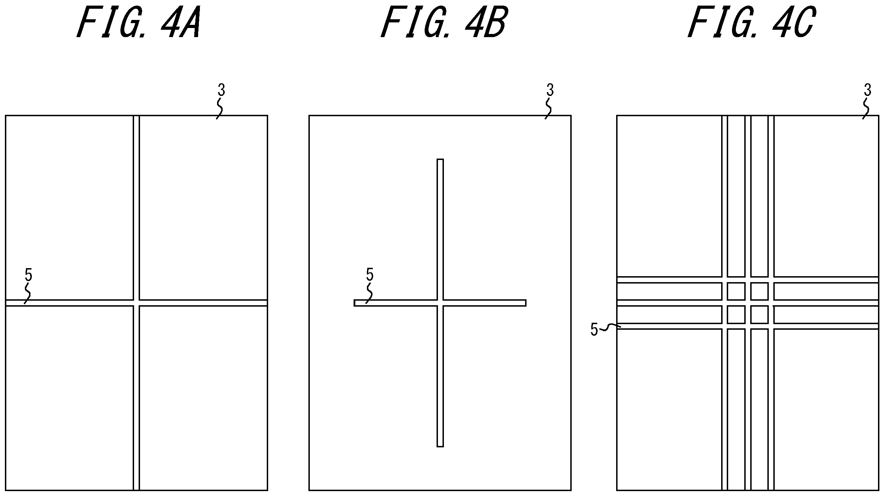

A foam made of expanded particles was obtained by modifying the mold so that the grooves illustrated in FIG. 4 were formed in the final foam upon molding of the foam. It was confirmed that the foam favorably followed the shape of the grooves formed in the mold and the formability was good in all of Examples 6 to 11.

### (Example 12)

A molded article was produced and the above-described evaluations thereof were performed in the manner similar to Example 3 with the exception that the foam beads were made to shrunk by heating in an oven at 150 °C after molding the foam to thereby form a huge bead gas structure on the surface of the foam. The results are listed in Table 2. Note that a molded article was obtained by applying the adhesive to area other than gap portions of the foam upon production of the molded article. Further, the adhesion area ratio was calculated by peeling the metal layer from the obtained molded article, visually confirming the adhesion state, and measuring the area of the portions where the metal layer and the foam layer had been in contact with each other.

### (Example 13)

A molded article was produced and the above-described evaluations thereof were performed in the manner similar to Example 4 with the exception that the production step of base resin pellets was changed as described below. The results are listed in Table 2.

### Base resin pellet production step:

Base resin pellets were produced by hot melt-kneading and subsequently extruding 60% by mass of GP685 (produced by PS Japan Corporation) as a polystyrene-based resin (PS) and 40% by mass S201A (produced by Asahi Kasei Corporation) as a polyphenylene ether-based resin (PPE) in an extruder. Note that the base resin was a polyphenylene ether resin and a general-purpose polystyrene resin. Because they both had an aromatic ring in the structural units, the amount of the monomer unit having an aromatic in the base resin was 100% by mass.

### (Example 14)

The internal pressure of the expandable particles in the manufacturing process of the secondary expandable particles was adjusted so that the magnification of the foam finally obtained was that described in Table 2 by referring to the contents described in Example 2 of JP H4-372630 A, and a molded article was produced using the obtained secondary expandable particles in the manner similar to that in Example 4. The results of the above-described evaluations are described in Table 2. Note that the base resin only contained polyethylene, and the amount of the monomer unit having an aromatic in the base resin was 0% by mass.

### (Example 15)

A molded article was produced and the above-described evaluations thereof were performed in the manner similar to Example 1 with the exception that the method for producing the foam layer was modified as follows, and the plate thickness of aluminum was modified as described in Table 2. The results are listed in Table 2.

### Production method of foam layer:

A foam made of a polyamide-based resin was prepared according to the method described in Example 5 of JP 2018-44127 A.

### (Examples 16 and 17)

A molded article was produced and the above-described evaluations thereof were performed in the manner similar to Example 3 with the exception that the thickness of the aluminum plate to be used was changed. The results are listed in Table 2.

### (Example 18)

A pressure treatment was conducted to expanded particles. An aluminum plate (B5 size, 182 × 257 mm) with a thickness of 0.3 mm was placed along the wall surface of the mold (area: 300 × 300 mm), and expanded particles were filled in the mold, and steam heating was carried out to thereby performing molding, to obtain a composite non-combustible molded article without lamination with an adhesive. The results of the evaluations on the obtained molded article are described in Table 2. Note that because the aluminum plate was placed in the mold in advance, distribution of the water vapor used for heating to the vicinity of the aluminum plate was insufficient. Thus, huge gap structures formed from gaps between the expanded particles caused by the insufficient heating were observed on the surface of the foam on the aluminum plate side. These huge gap structures were structure of both ends extended to ends of the composite non-combustible molded article. In addition, because the dimensions of the huge gap structures differed depending on the positions, the dimensions are not listed in Table 2. Even for the structure in which the dimensions differ depending on the positions, the averages of the dimensions of grooves at each position may be used as the width, length, and depth of the grooves.

### (Example 19)

A molded article was produced and the above-described evaluations thereof were performed in the manner similar to Example 1 with the exception that the maximum vapor pressure of the pressurized water vapor during production of expandable particles from the base resin pellets was changed to 210 kPa·G, the thickness of the aluminum plate was changed, and the thickness of the foam layer was changed. The results are listed in Table 2.

### (Comparative Example 1)

A molded article was produced and the above-described evaluations thereof were performed in the manner similar to Example 1 with the exception that the thickness of the aluminum plate was changed. The results are listed in Table 2.

### (Comparative Example 3)

A molded article was produced and the above-described evaluations thereof were performed in the manner similar to Example 1 with the exception that the production method of the foam layer was changed as described below, and the plate thickness of aluminum was modified as described in Table 2. The results are listed in Table 2.

### Production method of foam layer:

Secondary expanded particles of low-density polyethylene (LDPE) were obtained by adjusting the foaming temperature with reference to the content described in Example 3 of JP H4-372630 A to adjust the internal pressure of the expandable particles in the manufacturing process of the secondary expandable particles so that the finally obtained foam had a magnification of 15.0 (cm³/g).

Thereafter, the expandable particles were loaded into a vessel and were subjected to pressurization treatment by introducing pressurized air into the vessel (pressure increased to 0.4 MPa over 4 hours and then held at 0.4 MPa for 16 hours). The resultant was loaded into a mold for in-mold shaping including steam holes and were heated by steam so as to cause expansion and fusion of the expandable particles to one another. Thereafter, cooling was performed, and the resultant product was removed from the shaping mold to obtain a foam.

### (Comparative Example 4)

A molded article was produced and the above-described evaluations thereof were performed in the manner similar to Example 1 with the exception that a polystyrene foam (high-density polystyrene foam with a thickness of 10 mm, Item No. 70165, Tamiya Inc.) was used as the foam layer, and the plate thickness of aluminum was changed as described in Table 2. The results are listed in Table 2.

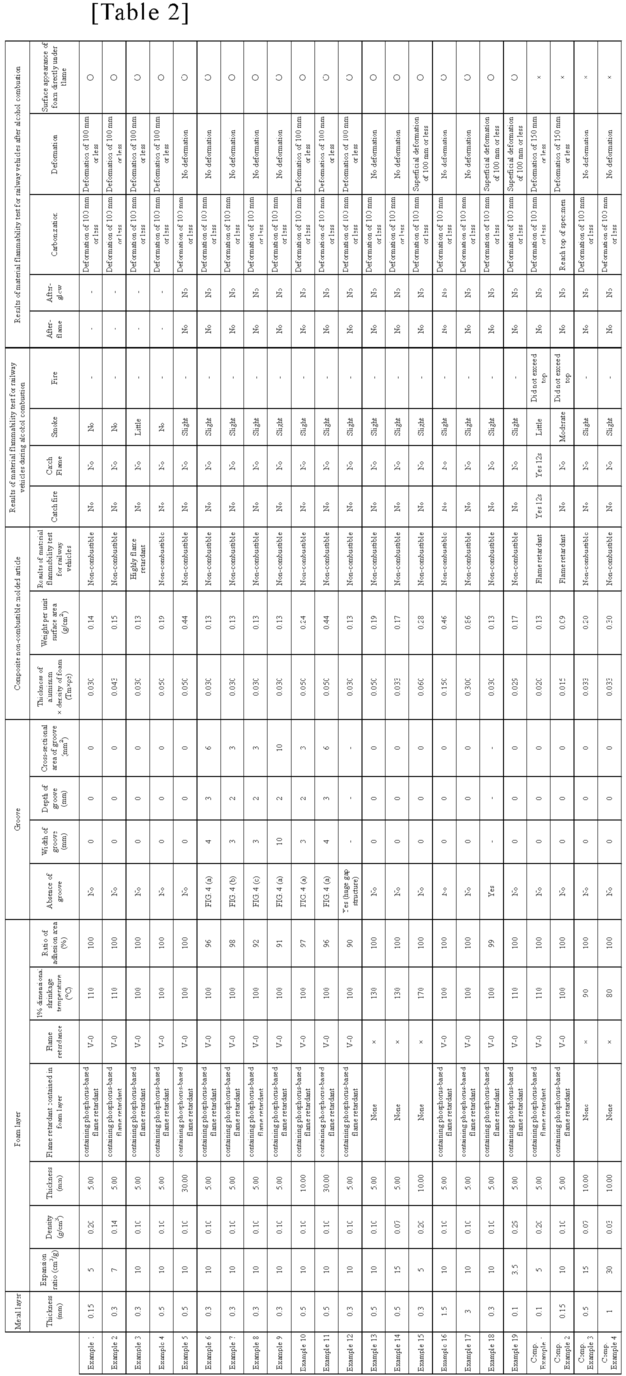

### INDUSTRIAL APPLICABILITY

The composite non-combustible molded article of the present disclosure has light weight and fire resistance, and therefore it can be suitably used for structures for railways, automobiles, motorcycles, and aircrafts, which are required to have fuel efficiency and to have fire resistance in a high-speed movement in which combustion tends to spread when a fire occurs.

### REFERENCE SIGNS LIST

- 1: Composite non-combustible molded article
- 2: Metal layer
- 3: Foam layer
- 4: Laminated structure
- 5: Groove

## Claims

1. A composite non-combustible molded article comprising:
a laminated structure of a metal layer and a foam layer,
wherein the foam layer is made of a bead foam,
a thickness Tm (mm) of the metal layer and the density ρe (g/cm³) of the foam layer satisfy Tm × ρe > 0.02, and
a 1% dimensional shrinkage temperature of the foam layer is 100 °C or higher.

2. The composite non-combustible molded article according to claim 1, wherein a groove is provided at an interface between the metal layer and the foam layer in the laminated structure.

3. The composite non-combustible molded article according to claim 2, wherein the groove is a groove in which at least one end thereof extends to an end of the composite non-combustible molded article.

4. The composite non-combustible molded article according to any one of claims 1 to 3, wherein a mass ratio of a flame retardant in the foam layer is 1 to 30% by mass with respect to 100% by mass of the foam layer.

5. The composite non-combustible molded article according to claim 4, wherein the flame retardant is a flame retardant containing a phosphorus atom.

6. The composite non-combustible molded article according to any one of claims 1 to 5, wherein the foam layer comprises a base resin containing 50% by mass or more of a monomer unit having an aromatic.
